Europäisches Patentamt

European Patent Office

Office européen des brevets

(11) Veröffentlichungsnummer: **0 433 617 A1**

## (12) EUROPÄISCHE PATENTANMELDUNG

(21) Anmeldenummer: 90120692.0

(22) Anmeldetag: 29.10.90

(51) Int. Cl.5: **B01D 53/18**, B01D 53/34, B01D 47/10

(30) Priorität: 20.12.89 DE 3941990

(43) Veröffentlichungstag der Anmeldung:
26.06.91 Patentblatt 91/26

(84) Benannte Vertragsstaaten:
AT BE CH DE IT LI

(71) Anmelder: Hugo Petersen Ges. für
verfahrenstechn. Anlagenbau mbH & Co KG
Postfach 4640

W-6200 Wiesbaden 1(DE)

(72) Erfinder: Lehmann, Klaus
Lenzhahner Weg 52
W-6272 Niedernhausen(DE)

(74) Vertreter: Carstens, Wilhelm, Dipl.-Phys.
L. & C. Steinmüller GmbH Patentabteilung
Postfach 10 08 55/10 08 65
W-5270 Gummersbach 1(DE)

(54) Verfahren zur Herstellung eines Venturis für einen Venturi-Wäscher und Venturi-Wäscher.

(57) Bei einem Verfahren zur Herstellung eines zu einer Symmetrieebene symmetrischen Venturis für einen VenturiWäscher in dem ein Gas mit Hilfe einer Waschflüssigkeit gereinigt wird, ist zur Vereinfachung der Herstellung vorgesehen, daß in einem plattenförmigen Werkstoff zwei der Symmetrieebene zugeordnete Halbventuris durch Pressen eingeformt werden und die Halbventuris zu einem Venturi zusammengefügt werden.

Fig 1

# VERFAHREN ZUR HERSTELLUNG EINES VENTURIS FÜR EINEN VENTURI-WÄSCHER UND VENTURI-WÄSCHER

Die Erfindung betrifft zunächst ein Verfahren zur Herstellung eines zu einer Symmetrieebene symmetrischen Venturis für einen Venturi-Wäscher, in dem ein Gas mit Hilfe einer Waschflüssigkeit gereinigt wird.

In Ullmanns Enzyklopädie der technischen Chemie, 4. neubearbeitete und erweiterte Auflage, Band 2, Verlag Chemie GmbH, 1972, Seiten 233, 234 sind auf Seite 234, Abb. 17 Venturis unterschiedlicher Bauarten abgebildet, die der Reinigung von Gasen mit Hilfe einer Waschflüssigkeit dienen. Die Waschflüssigkeit wird dabei einem Verteilergehäuse aufgegeben, welches in Strömungsrichtung des Rohgases gesehen vor dem Einlauftrichter des Venturis angeordnet ist, oder über eine im Einlauftrichter angeordnete Düse oder über einen außenliegenden Ringverteiler durch die perforierte Venturi-Kehle dem Venturi aufgegeben. Die Venturis sind aus mehreren die Achse des Venturis radial teilende Einzelwerkstücken zusammengefügt.

Sollen nun mehrere Venturis kleineren Durchmessers parallel geschaltet werden, da es bei großem Durchmesser eines Venturis schwierig ist, eine gleichmäßige Flüssigkeitsverteilung über den Gasquerschnitt zu erreichen, kann dies nur in einem aufwendigen Fertigungsverfahren aus einer Vielzahl an Bauteilen erfolgen.

Es ist die Aufgabe der vorliegenden Erfindung, ein gattungsgemäßes Verfahren zur Herstellung eines Venturis und ein Venturi für einen Venturi-Wäscher für das Reinigen von Gas mit Hilfe einer Waschflüssigkeit anzugeben, bei dem der Fertigungsaufwand verringert wird.

Diese Aufgabe wird verfahrensgemäß dadurch gelöst, daß in einem plattenförmigen Werkstoff zwei der Symmetrieebene zugeordnete Halbventuris durch Pressen eingeformt werden und die Halbventuris zu einem Venturi zusammengefügt werden.

Somit entfällt der hohe Fertigungsaufwand des Aneinanderfügens einer Vielzahl von kleineren Werkstücken zu einem Venturi. Auch können so in einfacher Weise kleine Venturi-Ausführungen gefertigt werden, da Länge und Durchmesser eines Halbventuris genau der Länge und dem Durchmesser eines zusammengefügten Venturis entsprechen.

Wird die Waschflüssigkeit über mindestens einen Durchlaß im Kehlenbereich eines Venturis in diesen eingeführt, kann dieser vor der Pressverformung in den plattenförmigen Werkstoff oder nach der Pressverformung in mindestens einen Halbventuri oder in den zusammengefügten Venturi eingebracht werden.

Für einen Venturi-Wäscher mit einer Vielzahl von parallel geschalteten Venturis werden in zwei Werkstoffplatten jeweils eine Reihe von auf Abstand angeordneter Halbventuris eingeformt und die verformten Platten unter Anlage der nicht verformten Bereiche zwischen den Halbventuris zu einer Venturi-Reihe aneinandergefügt. Somit steigt der Fertigungsaufwand für eine Vielzahl von parallel geschalteten Venturis zu einer Venturi-Reihe weniger als proportional mit der Anzahl der gefertigten Venturis an.

Soll ein Venturi-Wäscher mehrreihig ausgebildet werden, werden jeweils zwei Venturi-Reihen mittels mindestens einen an das Außenprofil der Venturis angepaßten Verbindungsstege miteinander verbunden.

Das Zusammenfügen der Halbventuris unter Anlage der nicht verformten Bereich, sowie das Zusammenfügen mehrerer Venturi-Reihen mittels eines Steges kann z. B. durch Kleben oder Schweißen erfolgen.

Als Basismaterial für die Herstellung derartiger Venturis für einen Venturi-Wäscher können neben plattenförmigen metallischen Werkstoffen auch plattenförmige Kunststoffe eingesetzt werden.

Die Erfindung ist auch auf einen Venturi-Wäscher für die Reinigung von Gas mit Hilfe einer Waschflüssigkeit gerichtet.

Vorrichtungsgemäß ist zur Lösung der Aufgabe vorgesehen, daß der Venturi aus zwei Halbventuris zusammengefügt ist, die in einem plattenförmigen Werkstoff durch Pressen eingeformt sind

Besitzt ein derartiger Venturi für einen Venturi-Wäscher einen Durchlaß im Kehlenbereich für den Eintritt von Waschflüssigkeit in den Venturi, wird vorgeschlagen, zwei gegenüberliegende und jeweils in einen der Halbventuris eingebrachte Durchlässe vorzusehen.

Für einen Venturi-Wäscher mit einer Vielzahl von parallel geschalteten Venturis werden vorzugsweise zwei geformte Werkstoffplatten zusammengefügt, in denen jeweils eine Venturi-Reihe von in einem Abstand nebeneinander angeordnete Halbventuris eingeformt sind, die unter Anlage der nicht verformten Bereiche der Werkstoffplatten zwischen den Halbventuris zu einer Venturi-Reihe aneinandergefügt sind.

Um einzelne Venturi-Reihen auf einfache Weise miteinander zu verbinden ist es zweckmäßig, daß für einen VenturiWäscher mit einer Vielzahl von Venturi-Reihen jeweils zwei Venturi-Reihen mit mindestens einem an das Außenprofil der Venturis angepaßten Verbindungssteg verbunden sind.

Als weiter bevorzugte Ausgestaltung des Venturi-Wäschers ist der Verbindungssteg im Kehlenbereich der beiden Venturi-Reihen vorgesehen.

Die Verbindung einzelner Venturi-Reihen zu einem mehrreihigen Venturi-Wäscher kann zum einen so erfolgen, daß die Venturi-Reihen derart miteinander verbunden sind, daß die Venturis der einen Reihe in die Lücken zwischen den Venturis der anderen Venturi-Reihe einragen. Zum anderen können die Venturis beider Venturi-Reihen gleichständig angeordnet sein.

Das erfindungsgemäße Verfahren und zwei Ausführungsformen eines nach diesem Verfahren hergestellten Venturi-Wäschers sollen anhand der beigefügten Zeichnungen näher beschrieben werden.

Es zeigt:

FIG. 1 eine isometrische Darstellung eines Venturi-Wäschers mit einer vertikal abwärts durchströmbaren Venturi-Reihe,

FIG. 2 eine isometrische Darstellung vergleichbar FIG. 1 mit einer vertikal aufwärts durchströmbaren Venturi-Reihe,

FIG. 3 einen Längsschnitt durch eine Venturi-Reihe längs der Linie III-III in FIG. 1,

FIG. 4 eine Draufsicht auf eine erste Ausführungsform eines Venturi-Wäschers mit mehreren Venturi-Reihen, bei denen die Venturis verschiedener Reihen gleichständig angeordnet sind,

FIG. 5 eine Draufsicht auf einen Venturi-Wäscher vergleichbar FIG. 4, bei dem die Venturis einer Reihe in die Lücken zwischen den Venturis einer anderen Reihe eingreifen.

Zur Herstellung eines Venturis 1 werden zwei Halbventuris 2 in zwei Werkstoffplatten 3 eingeformt, wobei bei dem Pressvorgang mit den halbschalenartigen Venturis verbundene nicht verformte Bereiche 4 in der Platte verbleiben können. Diese nicht verformten Bereiche können bei Herstellung eines einzelnen Venturis abgetrennt werden; es wird jedoch bevorzugt, die nicht verformten Bereiche 4 zu belassen und die beiden Halbventuris mit Hilfe dieser Bereiche miteinander zu verbinden.

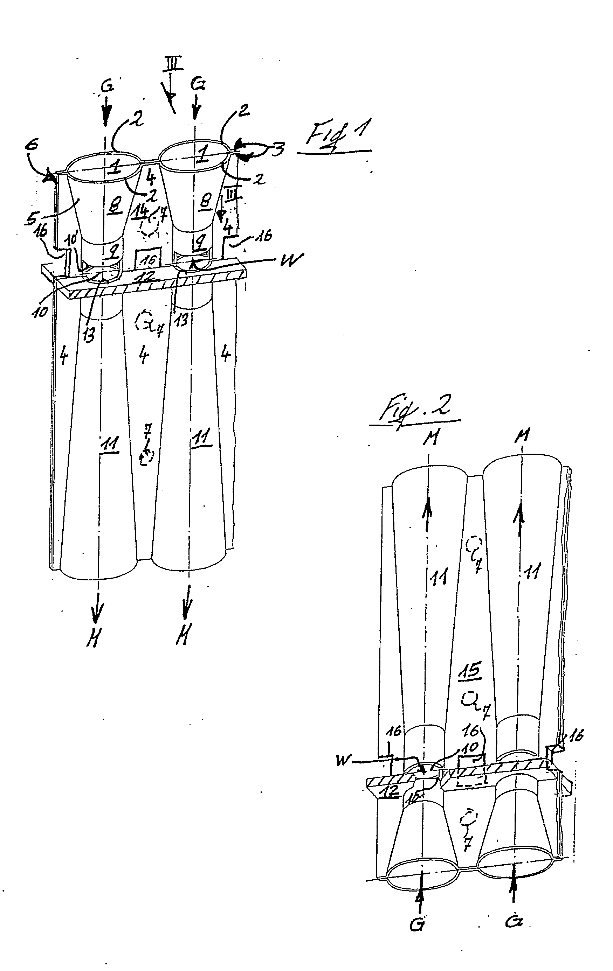

Die FIG. 1 zeigt einen Teilausschnitt aus einem VenturiWäscher bei dem zwei parallel zueinander angeordnete Venturis 1 vorgesehen sind, die aus zwei Halbventuri-Reihen 5 zu einer Venturi-Reihe 6 zusammengefügt sind. Wie aus der FIG. 1 ersichtlich ist, kann dies mit Hilfe von Punktschweißungen 7 erreicht werden, die in den nicht verformten Bereichen 4 angebracht sind.

Ein von Fremdstoffen zu reinigendes Rohgas G durchströmt die Einlauftrichter 8 und anschließend die Kehlenbereiche 9, in denen durch jeweils zwei gegenüberliegende Durchlässe 10, 10' eine Waschflüssigkeit W eingeleitet wird. Die Waschflüssigkeit vermischt sich mit dem zu reinigenden Rohgas intensiv und bindet die Verunreinigungen. Nach Durchströmung von den Kehlenbereichen nachfolgenden Diffusoren 11 wird das entstandene Mehrphasengemisch M einer nicht dargestellten Aufbereitungsanlage zugeführt, wie z. B. einem Elektronaßfilter, in der die im Rohgas G enthaltenen Verunreinigungen mit der Waschflüssigkeit W abgeschieden werden.

Wie beim Stand der Technik kann die Waschflüssigkeit W aber auch auf andere Weise dem Venturi-Wäscher zugeführt werden.

Um die Venturi-Reihe 6 mit einer weiteren Venturi-Reihe zu verbinden, ist ein Steg 12 vorgesehen, der die Venturis im Kehlenbereich 9 mit entsprechend ausgebildeten Ausnehmungen 13 übergreift und sich auf den nicht verformten Plattenbereichen 4 abstützt. Es ist selbstverständlich, daß in axialer Richtung des Venturis 1 gesehen, mehrerer derartiger Stege 12 vorgesehen sein können.

Bei der Ausführungsform gemäß FIG. 1 sind die Verbindungsstellen des Steges 12 mit der Venturi-Reihe 6 so gewählt, daß die Oberseite des Steges 12 mit den Unterkanten der spaltenförmigen Durchlässe 10, 10' abschließt. Der von den Venturi-Reihen 6 und der Oberseite des Steges 12 begrenzte Raum 14 dient der Aufnahme von Waschflüssigkeit W zur Beaufschlagung der Venturis der beiden zugeordneten Venturi-Reihen 6. In der FIG. 2 ist ein Venturi-Wäscher dargestellt, der vertikal aufwärts von dem zu reinigendem Gas G durchströmt wird. In diesem Falle ist die Oberseite des Steges 8 auf die untere Kante der Durchlässe 10, 10' ausgerichtet. Der Raum 15 zur Zufuhr der Waschflüssigkeit wird nicht durch den Trichterbereich der Venturi-Reihen 6 begrenzt, sondern durch den Diffusorbereich.

Um die Räume 14 bzw. 15 zwischen mehreren Venturi-Reihen miteinander zu verbinden, können vorzugsweise die in der FIG. 1 dargestellten Durchlässe 16 vorgesehen sein. Ein dadurch erreichbarer Niveauausgleich zwischen den Waschflüssigkeitszufuhrräumen 14 bzw. 15 im Falle der Ausführungsform gemäß FIG. 2 gewährleistet eine gleichmäßige Beschickung aller zu dem Venturi-Wäscher gehörigen Venturis.

Die Stege 12 können mit den Venturi-Reihen 6 ebenfalls vorzugsweise verklebt oder verschweißt sein.

Wie aus der FIG. 4 ersichtlich ist, können die zu verbindenden Venturi-Reihen 6 gleichständig angeordnet sein, so daß auch die Ausnehmungen 13 in den Kanten der Stege gegenüberliegend ausgebildet sind.

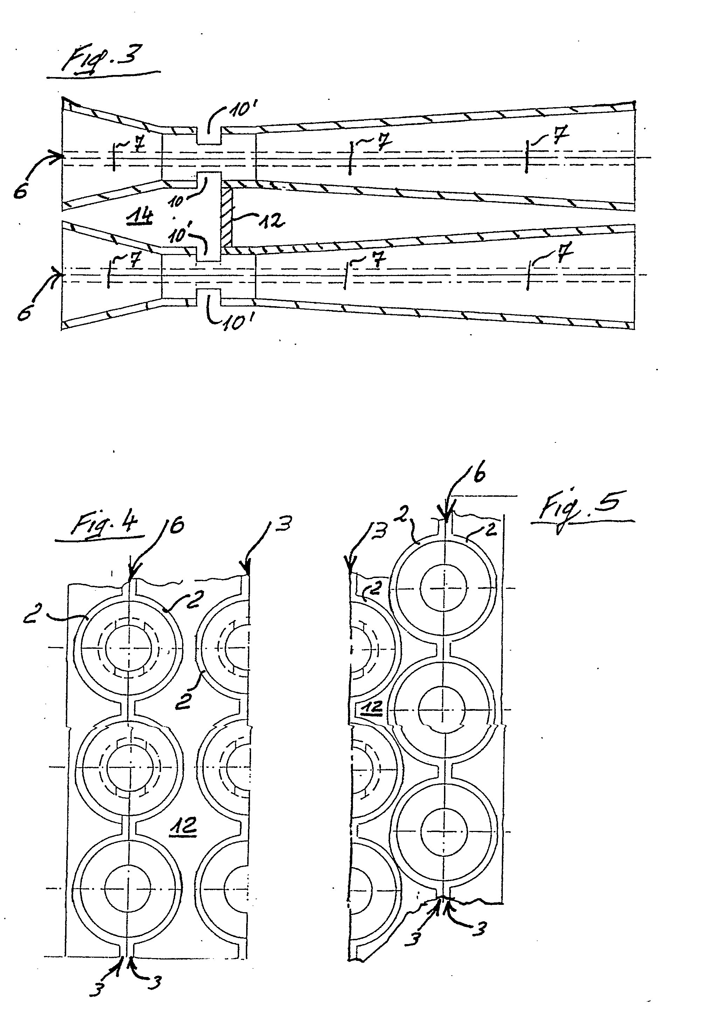

Bei der Ausführungsform gemäß FIG. 5, die einen kompakteren Aufbau eines Venturi-Wäschers ermöglicht, greifen die Venturis der rechten Reihe 6 in die Zwischenräume zwischen den Venturis der linken Reihe 6 ein. Die entsprechenden Ausnehmungen in den Kanten der Stege sind dann ebenfalls versetzt angeordnet.

Im nicht dargestellten Wäschergehäuse liegen die Außenkanten der nicht verformten Bereiche 4, die Außenkanten der am Rande angeordneten Stege 12 dicht an der Gehäuseinnenwandung an.

## Ansprüche

1.  Verfahren zur Herstellung eines zu einer Symmetrieebene symmetrischen Venturis für einen Venturi-Wäscher in dem ein Gas mit Hilfe einer Waschflüssigkeit gereinigt wird,
    **dadurch gekennzeichnet,**
    daß in einem plattenförmigen Werkstoff zwei der Symmetrieebene zugeordnete Halbventuris durch Pressen eingeformt werden und die Halbventuris zu einem Venturi zusammengefügt werden.

2.  Verfahren nach Anspruch 1, bei dem die Waschflüssigkeit über mindestens einen Durchlaß im Kehlenbereich eines Venturis in diesen eingeführt wird,
    **dadurch gekennzeichnet,**
    daß der Durchlaß vor der Pressverformung in den plattenförmigen Werkstoff eingebracht wird oder nach der Pressverformung den in mindestens einen Halbventuri oder in den zusammengefügten Venturi eingebracht wird.

3.  Verfahren nach Anspruch 1 oder 2,
    **dadurch gekennzeichnet,**
    daß für einen Venturi-Wäscher mit einer Vielzahl von parallel geschalteten Venturis in zwei Werkstoffplatten jeweils eine Reihe von auf Abstand angeordneten Halbventuris eingeformt wird und die verformten Platten unter Anlage der nicht verformten Bereiche zwischen den Halbventuris zu einer Venturi-Reihe aneinandergefügt werden.

4.  Verfahren nach mindestens einem der Ansprüche 1 bis 3,
    **dadurch gekennzeichnet,**
    daß jeweils zwei Venturi-Reihen mittels mindestens eines an das Außenprofil der Venturis angepaßten Verbindungssteges miteinander verbunden werden.

5.  Verfahren nach mindestens einem der Ansprüche 1 bis 4,
    **dadurch gekennzeichnet,**
    daß das Zusammenfügen durch Kleben oder Schweißen erfolgt.

6.  Verfahren nach mindestens einem der Ansprüche 1 bis 5,
    **dadurch gekennzeichnet,**
    daß als plattenförmiger Werkstoff ein Kunststoff oder ein metallischer Werkstoff eingesetzt wird.

7.  Venturi-Wäscher mit mindestens einem Venturi für das Reinigen von Gas mit Hilfe einer Waschflüssigkeit,
    **dadurch gekennzeichnet,**
    daß der Venturi (1) aus zwei Halbventuris (2) zusammengefügt ist, die in einem plattenförmigen Werkstoff (3) durch Pressen eingeformt sind.

8.  Venturi-Wäscher nach Anspruch 7 mit einem Durchlaß im Kehlenbereich für den Eintritt von Waschflüssigkeit in den Venturi,
    **dadurch gekennzeichnet,**
    daß zwei gegenüberliegende und jeweils in einen der Halbventuris eingebrachte Durchlässe (10, 10') vorgesehen sind.

9.  Venturi-Wäscher nach mindestens einem der Ansprüche 7 oder 8,
    **dadurch gekennzeichnet,**
    daß für einen Venturi-Wäscher mit einer Vielzahl von parallel geschalteten Venturis (1) zwei geformte Werkstoffplatten (3) zusammengefügt sind, in denen jeweils eine Halbventuri-Reihe (5) von in einem Abstand nebeneinander angeordneter Halbventuris (2) eingeformt sind, die unter Anlage der nicht verformten Bereiche (4) der Werkstoffplatten (3) zwischen den Halbventuris (1) zu einer Venturi-Reihe (6) aneinandergefügt sind.

10. Venturi-Wäscher nach mindestens einem der Ansprüche 7 bis 9,
    **dadurch gekennzeichnet,**
    daß für einen Venturi-Wäscher mit einer Vielzahl von Venturi-Reihen (6) jeweils zwei Venturi-Reihen (6) mit mindestens einem an das Außenprofil der Venturis (1) angepaßten Verbindungssteg (12) vorgesehen sind.

11. Venturi-Wäscher nach mindestens einem der Ansprüche 7 bis 10,
    **dadurch gekennzeichnet,**
    daß der Verbindungssteg (12) im Kehlenbereich (9) der beiden Venturi-Reihen (6) vorgesehen ist.

12. Venturi-Wäscher nach mindestens einem der Ansprüche 7 bis 11,
    **dadurch gekennzeichnet,**
    daß die Venturi-Reihen (6) derart miteinander verbunden sind, daß die Venturis (1) der einen Venturi -Reihe in die Lücken zwischen den Venturis (1) der anderen Venturi-Reihe (6) einragen (FIG. 5).

13. Venturi-Wäscher nach mindestens einem der Ansprüche 7 bis 11,
**dadurch gekennzeichnet,**
daß die Venturis (1) beider Venturi-Reihen (6) gleichständig angeordnet sind (FIG. 4).

Fig 1

Fig. 2

Fig.3

Fig.4

Fig.5

Europäisches
Patentamt

**EUROPÄISCHER
RECHERCHENBERICHT**

Nummer der Anmeldung

**EP 90 12 0692**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-B-2 831 638   (U. REGEHR)<br>* Ansprüche 1-3 *<br><br>— — — | 1,7 | B 01 D<br>53/18<br>B 01 D 53/34 |
| A | EP-A-0 196 120   (STUDIECENTRUM VOOR KERNENER-GIE)<br><br>— — — — — | | B 01 D 47/10 |

|  | RECHERCHIERTE SACHGEBIETE (Int. Cl.5) |
|---|---|
|  | B 01 D |

Der vorliegende Recherchenbericht wurde für alle Patentansprüche erstellt

| Recherchenort | Abschlußdatum der Recherche | Prüfer |
|---|---|---|
| Den Haag | 14 März 91 | KANOLDT W.W. |